# DEMANDE DE BREVET EUROPEEN

(11) **EP 4 650 625 A1**
(43) Date de publication de la demande: **19.11.2025**
(21) Numéro de dépôt: 25174219.3
(22) Date de dépôt: 05.05.2025
(51) Int. Cl.: F16H 61/32, F16H 63/34

(54) **PROCÉDÉ DE CONTRÔLE DE LA POSITION D'UN ÉLÉMENT MOBILE DANS UN DISPOSITIF D'UNE TRANSMISSION DE VÉHICULE**

(30) Priorité: 16.05.2024 FR 2404991
(71) Demandeur: VALEO EMBRAYAGES, 80009 Amiens (FR)
(72) Inventeur: FILLIETTE, Anthony, 95892 CERGY PONTOISE (FR); BESNARD, Mickael, 95892 CERGY PONTOISE (FR); LANOE, Thierry, 95892 CERGY PONTOISE (FR); ESMAEIL-SAEID, Ahmed, 12577 CAIRE (EG)
(74) Mandataire: Valeo Powertrain Systems

(57) **Abrégé**

La présente invention concerne un procédé de contrôle de la position d'un élément mobile dans un dispositif d'une transmission (1) de véhicule. Ledit procédé comprend les étapes suivantes : (i) déplacer angulairement un plateau de commande (10), (ii) mesurer la position angulaire d'un élément de sortie de couple d'un actionneur et comparer la valeur mesurée avec une valeur seuil de limitation (m), (iii) réduire la vitesse de rotation du moteur électrique de l'actionneur, (iv) appliquer un courant limité (Iₗᵢₘ) au moteur électrique de l'actionneur, (v) arrêter le pilotage du moteur électrique lorsque cumulativement la valeur du courant limité (Iₗᵢₘ) est sensiblement atteinte, la valeur mesurée de la position angulaire de l'élément de sortie de couple de l'actionneur correspond sensiblement à la position souhaitée et la vitesse angulaire de l'élément de sortie de couple est sensiblement nulle.

## Description

L'invention concerne un procédé de contrôle de la position d'un élément mobile dans un dispositif d'une transmission de véhicule.

Le procédé selon l'invention trouve un intérêt particulier dans le domaine des dispositifs de verrouillage en stationnement d'une transmission d'un véhicule.

Classiquement, un dispositif de verrouillage en stationnement d'une transmission de véhicule comprend une roue dentée de stationnement qui est liée mécaniquement en rotation à au moins une roue du véhicule. Un doigt de blocage en rotation de la roue dentée de stationnement est monté mobile entre une première position dite « *non park »* dans laquelle le doigt est désengagé de la roue dentée de stationnement et une deuxième position dite *« park »* dans laquelle le doigt est engagé entre deux dents de la roue dentée de stationnement permettant ainsi de bloquer la rotation de la roue dentée de stationnement et ainsi le véhicule.

Un actionneur électromécanique permet de modifier la position du doigt de blocage en fonction d'une instruction émise par un contrôleur. Cet actionneur comprend généralement un moteur électrique, un élément de sortie de couple lié directement ou indirectement au doigt de blocage et un capteur de position angulaire de l'élément de sortie de couple reflétant la position engagée ou désengagée du doigt de blocage.

Afin d'obtenir une position mécaniquement stable du dispositif de verrouillage dans une position engagée ou désengagée, il est connu d'intercaler un plateau de commande entre l'élément de sortie de couple de l'actionneur et le doigt de blocage. Ce plateau de commande comprend généralement un profil de came avec au moins deux portions concaves, au moins une portion convexe disposée entre les deux portions concaves. Un élément roulant, fixe par rapport à la transmission, est apte à être contraint au fond de l'une des portions concaves en position statique, garantissant une position mécaniquement équilibrée. Les deux portions concaves étant respectivement associées à la première et deuxième position du doigt de blocage.

Il est important de garantir un engagement réussi du doigt de blocage entre les dents de la roue de stationnement afin d'immobiliser le véhicule. Il est également important de transmettre cette information d'engagement ou désengagement à une unité de contrôle.

En utilisant uniquement le capteur de position angulaire de l'élément de sortie de couple lié au doigt, il est difficile d'atteindre la précision requise pour garantir l'engagement réussi, notamment en raison des tolérances de montage de l'actionneur sur la transmission.

En utilisant également la mesure du courant du moteur électrique, il est possible d'avoir un indicateur du couple appliqué par l'actionneur sur le plateau de commande. Sur la base de ce couple et de la connaissance de la forme du plateau de commande, il est possible de déterminer si la position souhaitée du plateau de commande est atteinte.

Le document US 2005/043878 A1 propose une méthode permettant de déterminer la position exacte du plateau de commande reflétant ainsi la position d'un élément mobile de la transmission. La méthode proposée utilise un capteur de position angulaire lié au plateau de commande et un capteur de couple appliqué par le moteur électrique pour faire pivoter le plateau de commande. Les valeurs associées à ces deux capteurs sont croisées dans une unité de contrôle permettant ainsi de connaître la position exacte de l'élément mobile de la transmission.

La méthode décrite dans le document précité à l'inconvénient de ne pas prendre en compte l'inertie de l'élément roulant lorsqu'il parcourt le chemin de came du plateau de commande notamment dans les phases de descente. Ainsi, il se peut que l'élément roulant dépasse le fond de la portion concave, ce qui génère une marge d'erreur qui n'est pas acceptable et qui dans le cas le plus défavorable peut mener à une information erronée sur la position exacte de l'élément mobile.

Il est ainsi nécessaire d'optimiser cette marge d'erreur afin qu'elle soit la plus faible possible et ce sans surcoût, c'est-à-dire sans ajout de capteurs ou composants supplémentaires.

Ainsi l'invention propose un procédé de contrôle de la position d'un élément mobile dans un dispositif d'une transmission de véhicule, le dispositif comprenant un élément mobile entre une première position et une deuxième position, un actionneur d'entraînement de l'élément mobile entre la première et la deuxième position comprenant un moteur électrique, un élément de sortie de couple, un capteur de consommation de courant du moteur électrique, un capteur de position angulaire de l'élément de sortie de couple, un plateau de commande disposé entre l'élément de sortie de couple de l'actionneur et l'élément mobile, ledit plateau comprenant un profil de came avec au moins deux portions concaves, au moins une portion convexe disposée entre les deux portions concaves et un élément roulant apte à être contraint au fond de l'une des portions concaves en position statique, les fonds des deux portions concaves étant respectivement associés à la première et deuxième position de l'élément mobile, le procédé est caractérisé en ce qu'il comprend les étapes suivantes :
i. déplacer angulairement le plateau de commande (10) en pilotant le moteur électrique de l'actionneur permettant ainsi à l'élément roulant (16) de sortir de la première portion concave (11) en direction de la seconde portion concave (13),
ii. mesurer la position angulaire de l'élément de sortie de couple de l'actionneur et comparer la valeur mesurée avec une valeur seuil de limitation (m) et dans le cas où la valeur mesurée est supérieure à la valeur seuil de limitation (m),
iii. réduire la vitesse de rotation du moteur électrique de l'actionneur,
iv. appliquer un courant limité (Ilim) au moteur électrique de l'actionneur,
v. arrêter le pilotage du moteur électrique lorsque cumulativement la valeur du courant limité (Ilim) est sensiblement atteinte, la valeur mesurée de la position angulaire de l'élément de sortie de couple de l'actionneur correspond sensiblement à la deuxième position et la vitesse angulaire de l'élément de sortie de couple est sensiblement nulle.

Un des avantages de l'invention est qu'au lieu de se fier uniquement à l'angle mesuré de l'élément de sortie de couple de l'actionneur pour déterminer si la position finale est effectivement atteinte, le courant consommé et la vitesse du moteur électrique de l'actionneur interviennent pour assurer que le mécanisme s'arrêtera dans la bonne position, c'est-à-dire une position mécaniquement équilibrée.

Cette méthode permet d'atteindre un objectif de précision de plus ou moins 1,5° sans augmenter le coût de fabrication du dispositif.

Un autre avantage de la présente invention est qu'il n'est pas nécessaire de réaliser d'apprentissage de la position du plateau de commande sur les lignes de montage du véhicule. Le contrôle de la position est réalisé en temps réel pour arrêter automatiquement le plateau de commande en limitant l'inertie et le couple disponible autour de la position souhaitée.

Le procédé selon l'invention présente également l'avantage de s'adapter à un déplacement du capteur de position angulaire de l'élément de sortie de couple de l'actionneur dû à la température ou au démontage voire le remplacement de l'actionneur par exemple.

L'élément roulant au sens de l'invention signifie qu'il est apte à se déplacer ou glisser le long de la surface de came, peu importe sa structure, l'élément roulant peut aussi être une lame élastique avec un bourrelet faisant office d'élément roulant.

Selon l'invention, le dispositif comprend également une roue dentée de stationnement qui est liée mécaniquement en rotation à au moins une roue du véhicule.

Selon l'invention, l'élément mobile est un doigt de blocage en rotation de la roue dentée de stationnement qui est monté mobile entre une première position dite « *non park »* dans laquelle le doigt est désengagé de la roue dentée de stationnement et une deuxième position dite *« park »* dans laquelle le doigt est engagé entre deux dents de la roue dentée de stationnement. Autrement dit, ces deux positions correspondent à des positions de verrouillage et déverrouillage de la roue dentée de stationnement. Les deux portions concaves du plateau de commande sont respectivement associées à la première et deuxième position du doigt de blocage.

Selon l'invention, lorsque l'élément roulant passe de la première position à la deuxième position le plateau de commande se déplace selon une plage angulaire α. Cette plage est par exemple comprise entre 28,5° et 31,5°, et de préférence 30°. Par exemple 0° correspond à la première position et 30° correspond à la deuxième position.

Selon une caractéristique additionnelle de l'invention, la valeur seuil de limitation m est une valeur comprise dans la plage angulaire α et atteinte à partir de 80% du déplacement angulaire du plateau de commande. Autrement dit, la limitation s'applique dans les derniers 20% du déplacement angulaire du plateau de commande 10.

Selon une autre caractéristique de l'invention, l'élément roulant atteint la deuxième position avec une déviation e par rapport au fond de la surface concave. Cette déviation e correspond au couple que génère le moteur électrique de l'actionneur avec le courant limité. Par exemple, la déviation e est comprise entre 0,3° et 0,5°. Ainsi, l'élément roulant « force » sur la pente ascendante de la deuxième portion concave mais est empêché d'aller plus loin du fait du courant limité.

En d'autres termes, grâce à l'invention, il est fait en sorte que l'élément roulant ne puisse pas aller beaucoup plus loin que le fond de la portion concave dans laquelle il est requis qu'il se déplace. Ce point est détecté en utilisant des valeurs seuils de courant consommé par le moteur électrique, la vitesse angulaire et la position angulaire de l'élément de sortie de couple de l'actionneur.

Selon l'invention, la vitesse de rotation du moteur électrique de l'actionneur est réduite par paliers. Plus précisément, la vitesse de rotation du moteur électrique de l'actionneur est réduite deux fois. Par exemple, la vitesse de rotation du moteur électrique est réduite une première fois dans une plage comprise entre 80% et 90% du déplacement angulaire du plateau de commande. La vitesse de rotation du moteur électrique est réduite une deuxième fois, plus fortement, par exemple dans une plage comprise entre 90% et 100% du déplacement angulaire du plateau de commande.

Cette limitation par paliers permet de limiter l'inertie et d'éviter les dépassements de positions souhaitées. La vitesse plus réduite à l'approche de la deuxième position permet de se rapprocher des conditions statiques, c'est-à-dire que le courant dépend alors principalement de la réaction de la forme de la portion concave.

Selon l'invention, la vitesse de rotation du moteur électrique est réduite d'un facteur compris entre 2 et 2,5.

Selon l'invention, le courant limité est inférieur au courant nécessaire à l'élément roulant pour sortir de l'une des portions concaves. Ceci a pour effet d'éviter à l'élément roulant d'aller plus loin que la position désirée.

La présente invention est décrite en lien avec un dispositif de verrouillage en stationnement d'une transmission de véhicule mais n'y est nullement limitée. Par exemple, l'invention peut également s'appliquer à un dispositif comprenant un système de changement de rapports basé sur la position angulaire de l'élément de sortie de couple de l'actionneur. Dans ce cas, chaque rapport est associé au fond d'une portion concave du profil de came du plateau de commande.

D'autres caractéristiques et avantages de l'invention ressortiront à la lecture qui suit d'un exemple de réalisation détaillé, en référence aux figures annexées :
la [Figure 1] représente un dispositif de verrouillage en stationnement d'une transmission d'un véhicule selon l'invention ;
la [Figure 2] illustre le fonctionnent du mécanisme de l'élément roulant au niveau du plateau de commande ;
de la [Figure 3] à la [Figure 7] sont représentés schématiquement les différentes étapes de l'élément roulant le long du chemin de came du plateau de commande ;
la [Figure 8] représente un graphique de l'évolution de l'élément roulant le long du chemin de came du plateau de commande entre ses deux positions en fonction du courant consommé par le moteur électrique de l'actionneur.
Il est à noter que les figures divulguent l'invention d'une manière suffisamment détaillée pour sa mise en œuvre, lesdites figures aidant à mieux définir l'invention au besoin. L'invention ne devrait cependant pas être limitée au mode de réalisation divulgué dans la description.

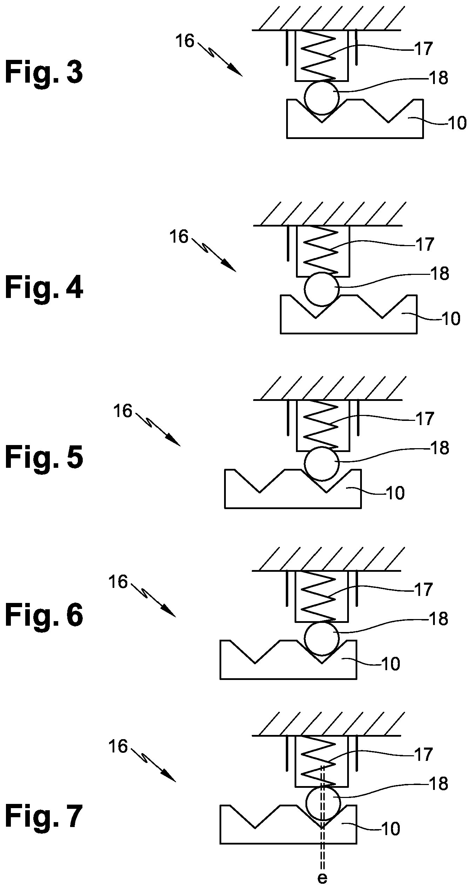

Le dispositif 1 de verrouillage en stationnement de la [Figure 3] est disposé en partie à l'intérieur de la transmission. Il comprend une roue dentée 2 de stationnement qui est liée mécaniquement en rotation à au moins une roue du véhicule.

Un cliquet de stationnement est monté pivotant autour d'un arbre 8. Le cliquet de stationnement est doté, à l'une de ses extrémités, d'un doigt de blocage 4 conçu pour venir en prise dans un évidement entre deux dents de la roue dentée de stationnement 2.

Le doigt de blocage 4 en rotation de la roue dentée de stationnement est monté mobile entre une première position dite « *non park »* dans laquelle le doigt est désengagé de la roue dentée de stationnement 2 et une deuxième position dite « *park* », comme représenté sur la [Figure 4], dans laquelle le doigt est engagé entre deux dents de la roue dentée de stationnement. Ainsi, la rotation de la roue dentée de stationnement est bloquée et le véhicule immobilisé.

Le doigt de blocage 4 est maintenu dans, et ramené à une position de déverrouillage au moyen d'un organe de rappel élastique 7, par exemple sous la forme d'un ressort de torsion, agencé autour de l'arbre 8 du cliquet de stationnement.

Une tête de fourche 6 montée coulissante pour adopter en alternance une position de verrouillage dans laquelle la tête de fourche 6 pousse le doigt de blocage 4 dans une position en prise, c'est à dire dans l'évidement de la roue dentée de stationnement 2, afin de bloquer la sortie de la transmission, et ainsi garer le véhicule.

La tête de fourche 6 est à même d'adopter une autre position, connue en tant que position de déverrouillage, dans laquelle elle n'interfère pas avec le doigt de blocage 4, permettant audit cliquet de stationnement d'être ramené par l'organe de rappel élastique 7 à sa position de déverrouillage du doigt de blocage 4.

La tête de fourche 6 est montée à l'extrémité d'une tige de guidage 9. Un ressort de compression 14 est monté autour de la tige 9 afin de pousser ladite tête de fourche 6 dans la position de verrouillage.

La tête de fourche 6 comprend un premier rouleau et un second rouleau 5, chacun étant monté de manière à tourner librement autour d'un axe, le premier rouleau étant positionné de manière à rouler contre le cliquet de stationnement lorsque la tête de fourche 6 passe à la position de verrouillage.

Un actionneur électromécanique (non visible) permet de modifier la position du doigt de blocage 4 en fonction d'une instruction émise par un contrôleur. Cet actionneur comprend un moteur électrique, un élément de sortie de couple lié directement ou indirectement au doigt de blocage et un capteur de position angulaire de l'élément de sortie de couple reflétant la position engagée ou désengagée du doigt de blocage.

Afin d'obtenir une position mécaniquement stable du dispositif de verrouillage dans une position engagée ou désengagée, un plateau de commande 10 est interposé entre l'élément de sortie de couple de l'actionneur et le doigt de blocage 4. L'élément de sortie de couple de l'actionneur vient s'engager dans une interface 15 du plateau de commande 10, par exemple grâce à un accouplement mâle/femelle.

Ce plateau de commande 10 comprend un profil de came avec au moins deux portions concaves 11, 13 et au moins une portion convexe 12 disposée entre les deux portions concaves 11, 13. Un élément roulant 16, également appelé système de billage dans le présent cas, est apte à être contraint au fond de l'une des portions concaves 11, 13 en position statique, garantissant une position mécaniquement équilibrée. Les deux portions concaves 11, 13 sont respectivement associées à la première et deuxième position du doigt de blocage.

Le plateau de commande 10 est apte à être pivoté sous l'effet du couple fourni par l'actionneur. Lorsque l'élément roulant 16 passe de la première position à la deuxième position le plateau de commande 10 se déplace selon une plage angulaire α, par exemple de 30°.

Le système de billage qui est monté fixe sur la transmission comprend un élément élastique 17 sous la forme d'un ressort au bout duquel se trouve une bille 18. Cette bille 18 est en contact avec le profil de came du plateau de commande 10.

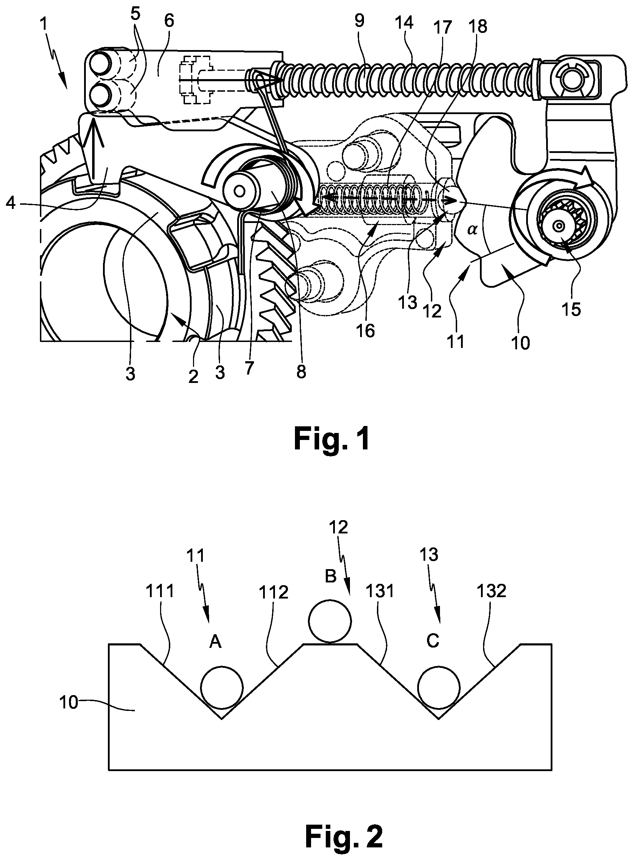

L'interaction entre l'élément roulant 16 et le plateau de commande 10 est illustré à la [Figure 2].

Le moyen mécanique de retenue du plateau de commande 10 dans ses positions fonctionnelles « *park »* et *« non park »* est représenté schématiquement seulement avec la bille 18. La zone fonctionnelle du plateau de commande 10 est définie par le chemin de came qui comprend les deux portions concaves 11, 13 et la portion convexe 12.

Sous l'effet d'un couple fourni par l'actionneur, le plateau de commande pivote devant la bille 18, qui se déplace dans une direction sensiblement radiale par rapport au plateau de commande 10. Lorsque le plateau de commande tourne sa zone fonctionnelle défile. La bille 18 s'avance dans les portions concaves 11, 13 du plateau de commande 10 au passage de celui-ci.

La bille apparait trois fois, respectivement dans les positions A, B, C, dans les deux portions concaves et sur la portion convexe. Par exemple, A est considéré comme étant la première position dite « *non park »,* C est considéré comme étant la deuxième position dite *« park »* et B une position intermédiaire de la bille sur la portion convexe du chemin de came.

La bille 18 peut passer de la première portion concave 11 à la deuxième portion concave 13 et inversement en fonction du sens de rotation du moteur électrique de l'actionneur. L'invention s'applique aux deux sens de rotation.

La première portion concave 11 comprend deux pentes 111 et 112, la deuxième portion concave 13 comprend deux pentes 131 et 132. La portion convexe est définie en partie par les pentes 112 et 131.

Lorsque la bille 18 passe de la première portion concave 11 à la deuxième portion concave 13, les pentes 111 et 131 sont dites descendantes et les pentes 112 et 132 sont dites ascendantes. Inversement, lorsque la bille 18 passe de la deuxième portion concave 13 à la première portion concave 11, les pentes 111 et 131 sont dites ascendantes et les pentes 112 et 132 sont dites descendantes. **Lorsque la** bille 18 parcours une pente ascendante, le moteur électrique de l'actionneur génère un couple positif et lorsque la bille 18 parcours une pente descendante, le moteur électrique de l'actionneur génère un couple négatif.

En connaissant la géométrie du chemin de came du plateau de commande 10, il est ainsi possible de connaitre la courbe de couple appliqué par le moteur électrique de l'actionneur en fonction de la position angulaire du plateau de commande 10.

L'avantage de ce plateau de commande 10 est que si le couple du moteur électrique de l'actionneur disparait, le plateau de commande 10 est ainsi retenu mécaniquement en position « *park »* ou *« non park ».*

Les différentes étapes du procédé selon l'invention vont maintenant être décrites.

La [Figure 3] représente le plateau de commande 10 dans sa première position dite « *non park »* en situation initiale, c'est-à-dire que le moteur électrique de l'actionneur n'est pas alimenté. L'élément de sortie de couple de l'actionneur couplé au plateau de commande 10 est également dans sa position dite « *non park ».* Le capteur angulaire de l'élément de sortie de couple de l'actionneur mesure ainsi la position « *non park »* avec deux marges d'erreur, une première liée aux tolérances d'assemblage de l'actionneur sur la transmission et une deuxième liée au capteur lui-même.

La [Figure 4] représente le plateau de commande 10 lorsqu'il commence à se mettre en mouvement, c'est-à-dire que la bille 18 passe de la première portion concave 11 à la deuxième portion concave 13. Sur cette [Figure 4] la bille est sur la pente ascendante 112 de la première portion concave 11 en direction de la crête de la portion convexe 12. Dans cette position et comme vu précédemment, le couple généré par le moteur électrique est positif et le courant consommé par le moteur électrique est aussi positif.

La [Figure 5] représente le plateau de commande 10 dans une position où la bille 18 a dépassé la crête de la portion convexe 12 et se trouve sur la pente descendante 131 de la deuxième portion concave 13. Dans cette position, la bille 18 se laisse « avaler », c'est-à-dire que le couple généré par le moteur électrique devient négatif et le courant consommé par le moteur électrique est aussi négatif.

Afin que le dispositif ne soit pas entrainé par la pente descendante 131, on mesure la position angulaire de l'élément de sortie de couple de l'actionneur et on compare cette mesure avec une valeur seuil de limitation m.

Dans le cas où la valeur mesurée de la position angulaire est supérieure à la valeur seuil de limitation m, la vitesse de rotation du moteur électrique de l'actionneur est réduite lorsque la bille 18 approche le fond de la deuxième portion concave 13 et on applique un courant limité Iₗᵢₘ au moteur électrique de l'actionneur.

Il est nécessaire de freiner la descente de la bille 18 car le courant consommé par le moteur électrique n'est pas à l'image de la position de la bille 18 sur le chemin de came du plateau de commande 10 du fait des effets dynamiques. En d'autres termes, il est nécessaire de réduire la vitesse de rotation du moteur électrique pour que les effets dynamiques soient négligeables et que le courant consommé soit à l'image du parcours de la bille 18 sur le chemin de came du plateau de commande 10.

La valeur seuil de limitation m est une valeur angulaire de calibration qui est mémorisée dans le contrôleur de l'actionneur. La valeur seuil de limitation m est atteinte lorsque l'on atteint les derniers 20% du déplacement angulaire du plateau de commande 10.

Par exemple, lorsque la bille 18 passe de la première position à la deuxième position le plateau de commande 10 se déplace selon une plage angulaire α qui est de 30°. En d'autres termes, la vitesse de rotation du moteur électrique est réduite et le courant limité Iₗᵢₘ sur sensiblement les derniers 20% du déplacement angulaire du plateau de commande 10, soit entre 24° et 30°, autrement dit sur 6°.

La vitesse de rotation du moteur électrique est réduite d'un facteur compris entre 2 et 2,5. Par exemple la vitesse de rotation du moteur électrique passe de 12800 tours/min à 5600 tours/min. La vitesse de rotation du moteur électrique de l'actionneur est réduite par paliers, par exemple deux fois. Dans le cas présent, la vitesse de rotation du moteur électrique de l'actionneur est réduite une première fois dans une plage comprise entre 80% et 90% du déplacement angulaire du plateau de commande 10, soit entre 24° et 27°, autrement dit sur 3°. La vitesse de rotation du moteur électrique de l'actionneur est réduite et une deuxième fois, plus fortement, dans une plage comprise entre 90% et 100% du déplacement angulaire du plateau de commande 10, soit entre 27° et 30°, autrement dit sur 3°.

La valeur de courant limitée Iₗᵢₘ est une valeur de calibration qui est mémorisée dans le contrôleur de l'actionneur. Par exemple, la valeur de courant limitée est de 1,3A.

La [Figure 6] représente le plateau de commande 10 dans une position ou la bille 18 atteint le fond de la deuxième portion concave 13. Le couple généré et le courant consommé par le moteur électrique s'inversent et deviennent sensiblement proche de zéro. L'élément de sortie de couple de l'actionneur couplé au plateau de commande 10 est dans sa position dite *« park ».* Le capteur angulaire de l'élément de sortie de couple de l'actionneur mesure ainsi la position *« park »* avec deux marges d'erreur, une première liée aux tolérances d'assemblage de l'actionneur sur la transmission et une deuxième liée au capteur lui-même.

La [Figure 7] représente le plateau de commande 10 dans une position où l'on souhaite s'arrêter, c'est-à-dire dans une position où la bille 18 dépasse légèrement le fond de la deuxième portion concave 13, ce qui représente une zone de déviation e par rapport à la position du fond de la deuxième portion concave 13.

Le fait qu'un courant limité soit appliqué au moteur électrique de l'actionneur empêche la bille 18 de remonter la pente 132 et permet de s'assurer d'avoir bien franchi le fond de la deuxième portion concave 13 et d'être dans la zone de déviation e.

Le pilotage du moteur électrique est arrêté lorsque cumulativement la valeur du courant limité Iₗᵢₘ est sensiblement atteinte, la valeur mesurée de la position angulaire de l'élément de sortie de couple de l'actionneur correspond sensiblement à la deuxième position « *park »* de la bille 18 et la vitesse angulaire de l'élément de sortie de couple de l'actionneur est sensiblement nulle. « Sensiblement » signifie qu'il existe un seuil de tolérance pour chacun de ces critères. Ces seuils de tolérances sont des valeurs de calibration qui sont mémorisées dans le contrôleur de l'actionneur.

Dans le cas présent, le courant limité Iₗᵢₘ est considéré comme atteint quand il est compris entre 1,2A et 1,4A ce qui signifie que l'élément roulant 16 ou la bille 18 est en train de « forcer » sur la pente ascendante de la seconde portion concave et que l'on se trouve dans la zone de déviation e acceptable.

Dans le cas présent, la deuxième position de l'élément roulant 16 est considérée comme atteinte quand le capteur de position angulaire de l'élément de sortie de couple sortie de l'actionneur est de +/- 2,5° par rapport à la position enregistrée dans le contrôleur.

La vitesse angulaire nulle de l'élément de sortie de couple de l'actionneur est considérée comme atteinte avec un seuil de tolérance de +/- 0.5 rad/s ce qui permet une faible inertie. La vitesse angulaire de l'élément de sortie de l'actionneur est dérivée de sa position angulaire.

Le plateau de commande 10 est ainsi arrêté lorsque la bille 18 dépasse légèrement le fond de la deuxième portion concave 13 ce qui représente une déviation e par rapport au fond de la deuxième portion concave 13. Cette déviation e représente la position angulaire finale du plateau de commande 10 qui correspond au couple que génère l'actionneur avec le courant limité Iₗᵢₘ. Par exemple, cette déviation e est comprise entre 0,3° et 0,5°.

Le capteur angulaire de l'élément de sortie de couple de l'actionneur mesure ainsi la position « *park »* avec deux marges d'erreur, une première liée aux tolérances d'assemblage de l'actionneur sur la transmission, une deuxième liée au capteur lui-même. La déviation e qui est souhaitée, vient compenser ces deux marges d'erreur pour assurer un bon positionnement de l'élément roulant dans la position désirée.

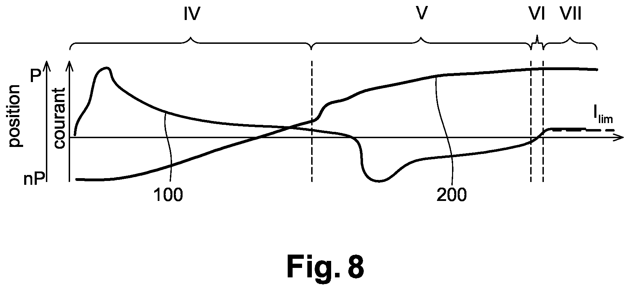

La [Figure 8] représente sur un même graphique la courbe 100 de la consommation de courant du moteur électrique de l'actionneur selon l'avancement de la bille 18 sur le chemin de came du plateau de commande 10 et la courbe 200 montre la position du plateau de commande entre ses positions *« park »* et *« non park ».*

Le graphique est découpé en quatre phases qui correspondent aux différentes étapes visibles de la [Figure 4] à la [Figure 7].

La courbe 100 montre qu'au début du mouvement du plateau de commande 10 on a un pic positif de courant consommé correspondant à l'effort nécessaire pour que la bille 18 puisse vaincre la pente ascendante 112 de la première portion concave 11. Ensuite le courant consommé baisse jusqu'à devenir négatif signifiant que la bille se trouve sur la pente descendante 131 de la deuxième portion concave 13. Ensuite le courant consommé redevient positif ce qui signifie que la bille 18 a franchi le fond de la deuxième portion concave 13 et commence à parcourir la pente ascendante 132. Du fait du courant limité Iₗᵢₘ appliqué au moteur électrique, la bille 18 ne peut plus monter et s'arrête à la position désirée avec la déviation e ce qui garantit la position souhaitée.

Bien que l'invention ait été décrite en liaison avec un mode de réalisation particulier, il est bien évident qu'elle n'y est nullement limitée et qu'elle comprend tous les équivalents techniques des moyens décrits.

Dans les revendications, les symboles de référence entre parenthèses ne doivent pas être interprétés comme une limitation de la revendication.

## Revendications

1. Procédé de contrôle de la position d'un élément mobile dans un dispositif d'une transmission (1) de véhicule, le dispositif comprenant :
- un élément mobile (4) entre une première position et une deuxième position,
- un actionneur d'entrainement de l'élément mobile (4) entre la première et la deuxième position comprenant un moteur électrique, un élément de sortie de couple, un capteur de consommation de courant du moteur électrique, un capteur de position angulaire de l'élément de sortie de couple,
- un plateau de commande (10) disposé entre l'élément de sortie de couple de l'actionneur et l'élément mobile (4), ledit plateau (10) comprenant un profil de came avec au moins deux portions concaves (11, 13), au moins une portion convexe (12) disposée entre les deux portions concaves (11, 13) et un élément roulant (16) apte à être contraint au fond de l'une des portions concaves (11, 13) en position statique, les fonds des deux portions concaves (11, 13) étant respectivement associés à la première et deuxième position de l'élément mobile (4),
le procédé est **caractérisé en ce qu'**il comprend les étapes suivantes :
i. déplacer angulairement le plateau de commande (10) en pilotant le moteur électrique de l'actionneur permettant ainsi à l'élément roulant (16) de sortir de la première portion concave (11) en direction de la seconde portion concave (13),
ii. mesurer la position angulaire de l'élément de sortie de couple de l'actionneur et comparer la valeur mesurée avec une valeur seuil de limitation (m) et dans le cas où la valeur mesurée est supérieure à la valeur seuil de limitation (m),
iii. réduire la vitesse de rotation du moteur électrique de l'actionneur,
iv. appliquer un courant limité (Iₗᵢₘ) au moteur électrique de l'actionneur,
v. arrêter le pilotage du moteur électrique lorsque cumulativement la valeur du courant limité (Iₗᵢₘ) est sensiblement atteinte, la valeur mesurée de la position angulaire de l'élément de sortie de couple de l'actionneur correspond sensiblement à la deuxième position et la vitesse angulaire de l'élément de sortie de couple est sensiblement nulle.

2. Procédé selon la revendication 1, **caractérisé en ce que** lorsque l'élément roulant (16) passe de la première position à la deuxième position le plateau de commande (10) se déplace selon une plage angulaire α, par exemple comprise entre 28,5 et 31,5°, et de préférence 30°.

3. Procédé selon la revendication 2, **caractérisé en ce que** la valeur seuil de limitation (m) est une valeur comprise dans la plage angulaire α et atteinte à partir de 80% du déplacement angulaire du plateau de commande (10).

4. Procédé selon l'une des revendications précédentes, **caractérisé en ce que** l'élément roulant (16) atteint la deuxième position avec une déviation (e) par rapport au fond de la surface concave, cette déviation (e) correspond au couple que génère le moteur électrique de l'actionneur avec le courant limité (Iₗᵢₘ).

5. Procédé selon la revendication 4, **caractérisé en ce que** la déviation (e) est comprise entre 0,3° et 0,5°.

6. Procédé selon l'une des revendications précédentes, **caractérisé en ce que** la vitesse de rotation du moteur électrique de l'actionneur est réduite par paliers.

7. Procédé selon la revendication 6, **caractérisé en ce que** la vitesse de rotation du moteur électrique de l'actionneur est réduite une première fois dans une plage comprise entre 80% et 90% du déplacement angulaire du plateau de commande (10) et une deuxième fois, plus fortement, dans une plage comprise entre 90% et 100% du déplacement angulaire du plateau de commande (10).

8. Procédé selon l'une des revendications précédentes, **caractérisé en ce que** la vitesse de rotation du moteur électrique est réduite sur la base d'un facteur compris entre 2 et 2,5.

9. Procédé selon l'une des revendications précédentes, **caractérisé en ce que** le courant limité (Iₗᵢₘ) est inférieur au courant nécessaire à l'élément roulant (16) pour sortir de l'une des portions concaves (11, 13).
